# EUROPÄISCHE PATENTSCHRIFT

(11) **EP 4 208 651 B1**
(45) Veröffentlichungstag und Bekanntmachung des Hinweises auf die Patenterteilung: **08.05.2024**
(21) Anmeldenummer: 21805388.2
(22) Anmeldetag: 21.10.2021
(51) Int. Cl.: F16D 9/08

(54) **VORRICHTUNG ZUR ÜBERWACHUNG EINER EINE ERSTE WELLE UND EINE ZWEITE WELLE KUPPELNDEN WELLENKUPPLUNG**
DEVICE FOR MONITORING A SHAFT COUPLING COUPLING A FIRST SHAFT AND A SECOND SHAFT
DISPOSITIF DE SURVEILLANCE D'UN ARBRE D'EMBRAYAGE D'ACCOUPLEMENT ACCOUPLANT UN PREMIER ARBRE ET UN SECOND ARBRE

(30) Priorität: 15.01.2021 EP 21151797
(43) Veröffentlichungstag der Anmeldung: 12.07.2023
(73) Patentinhaber: Siemens Aktiengesellschaft, 80333 München (DE)
(72) Erfinder: SCHIMMER, Jürgen, 90473 Nürnberg (DE); NOLTING, Christoph, 91315 Höchstadt/Aisch (DE); SCHEIBNER, Dirk, 90473 Nürnberg (DE); ZETTNER, Jürgen, 90587 Veitsbronn (DE)
(74) Vertreter: Siemens Patent Attorneys
(86) Internationale Anmeldenummer: PCT/EP2021/079243
(87) Internationale Veröffentlichungsnummer: WO 2022/152415

(56) Entgegenhaltungen:
- CN-A- 103 889 136
- US-A1- 2003 016 351
- US-A1- 2019 211 749

## Beschreibung

Die Erfindung betrifft eine Vorrichtung zur Überwachung einer eine erste Welle und eine zweite Welle kuppelnden Wellenkupplung.

Wellenkupplungen sind kritische Komponenten in Antriebssträngen, die z. B. bei Überlast beschädigt werden können. Besonders sicherheitskritisch ist beispielsweise eine defekte Ankopplung eines Gebers an einen Motor, da ein fehlerhaftes Referenzsignal für eine Regelung vorliegen kann und so ein sicherer Betrieb des Motors nicht gewährleistet werden kann. Zudem können bei derartigen Schäden keine präzisen Drehzahlvorgaben mehr eingehalten werden.

Um Schäden an Wellenkupplungen zu vermeiden, werden meist einzelne oder alle Komponenten der Wellenkupplung überdimensioniert. Dies ist jedoch sehr kostenintensiv.

Der Erfindung liegt die Aufgabe zugrunde, dies zu verbessern.

Die Lösung der Aufgabe gelingt durch den Gegenstand des Anspruchs 1.

Die Erfindung eignet sich für verschiedene Wellenkupplungen, z. B. für eine Wellenkupplung, die eine Maschinenwelle und eine Last kuppelt, sowie für eine Wellenkupplung, die eine Geberwelle und eine Maschinenwelle kuppelt.

Insbesondere für Servomotoren kann die Erfindung angewendet werden. Servomotoren sind für Arbeitsaufgaben konzeptioniert, die eine hohe Präzision erfordern. Hierfür ist eine Kenntnis über eine Integrität einer Wellenkupplung besonders vorteilhaft.

Elektromagnetische Strahlung in Form von Licht ist erfindungsgemäss relevant.

Unter Licht wird in der Regel der sichtbare Teil des elektromagnetischen Spektrums im Bereich von 380 nm bis 780 nm verstanden. Auch unsichtbare Bereiche von elektromagnetischer Strahlung können für die Erfindung verwendet werden, insbesondere Infrarotlicht oder ultraviolettes Licht. Vorteilhaft ist eine Ausführungsform, wonach ein vorderes axiales Ende des Fehlerbekanntmachungselement an der ersten Welle befestigbar ist, wobei ein hinteres axiales Ende an der zweiten Welle befestigbar ist.

Dies bietet den Vorteil, dass auch eine Nachrüstung bestehender Maschinen möglich ist.

Eine Befestigung gelingt beispielsweise mittels Klebung und/oder Schrauben.

Vorteilhaft ist eine Ausführungsform, wonach das Fehlerbekanntmachungselement derart ausgebildet ist, dass dieses bei einem asynchronen Verlauf der ersten Welle zur zweiten Welle abscherbar bzw. abbrechbar ist.

Dies gelingt besonders vorteilhaft mittels einer Sollbruchstelle.

Eine Sollbruchstelle ist jedoch nicht unbedingt nötig. Das Fehlerbekanntmachungselement kann auch ein Material aufweisen, dass bei Asynchronität der Wellen bricht.

Jedoch kann das Fehlerbekanntmachungselement den Fehler (also asynchronen Verlauf) auch auf andere Weise bekannt machen. Z. B. kann sich das Fehlerbekanntmachungselement bei Asynchronität biegen und/oder verdrehen. Auch andere Veränderungen sind möglich.

Die Welle bzw. Wellen sind vorteilhaft als Hohlwelle ausgeführt. Das Fehlerbekanntmachungselement weist vorteilhaft derartige Maße auf, dass das Fehlerbekanntmachungselement innerhalb der Hohlwelle angeordnet werden kann.

Ein beispielhafter Durchmesser des Fehlerbekanntmachungselements liegt zwischen 1 mm und 20 cm, vorteilhaft 5 mm und 10 cm.

Vorteilhaft ist eine Ausführungsform, wonach das Fehlerbekanntmachungselement derart ausgebildet ist, dass eine erste Bruchfläche eines durch Abscherung und/oder Abbrechen hervorgegangenen ersten Teils des Fehlerbekanntmachungselements und eine zweite Bruchfläche eines durch Abscherung und/oder Abbrechen hervorgegangenen zweiten Teils des Fehlerbekanntmachungselements im Betrieb der ersten Welle und zweiten Welle, derart aneinander reiben, dass Strahlung, vorzugsweise Licht, insbesondere durch Tribolumineszenz, emittierbar ist.

Der Begriff Tribolumineszenz beschreibt ein Auftreten einer Lichtemission, insbesondere einer kalten Lichtemission, bei mechanischer Beanspruchung von Festkörpern. Der Begriff wir meist weiter gefasst und zum Beispiel auch die Lumineszenz dazu gezählt.

Bei der Lumineszenz wird ein physikalisches System durch von außen zugeführte Energie in einen angeregten Zustand versetzt und emittiert beim Übergang in seinen Grundzustand unter Aussendung von Photonen Licht (inklusive Strahlung außerhalb des sichtbaren Bereichs).

Die Erfindung eignet sich sowohl für eine Emission von Strahlung, vorzugsweise Licht, durch Lumineszenz sowie durch Tribolumineszenz.

Von der Erfindung sind zudem folgende Effekte umfasst:
Eine Emission von Strahlung basierend auf Fluoreszenz, wenn zwischen einer Absorption von Energie und der Emission kein Aktivierungsprozess stattfindet.

Eine Emission von Strahlung basierend auf Phosphoreszenz, wenn ein angeregter Zwischenzustand die Energie für eine gewisse Zeit einfrieren kann.

Vorteilhaft ist eine Ausführungsform, wonach das Fehlerbekanntmachungselement Kunststoff aufweist.

Vorteilhaft ist eine Ausführungsform, wonach das Fehlerbekanntmachungselement Polytetrafluorethylen (PTFE) und/oder Polydimethylsiloxan (PDMS) aufweist.

Vorteilhaft ist eine Ausführungsform, wonach das Fehlerbekanntmachungselement ZnS:Cu + PTFE aufweist.

Vorteilhaft ist eine Ausführungsform, wonach das Fehlerbekanntmachungselement ZnS:Cu + PDMS + PTFE aufweist.

Vorteilhaft ist eine Ausführungsform, wonach das Fehlerbekanntmachungselement ZnS:Cu + PDMS aufweist.

ZnS:Cu ist hierbei kupferdotiertes Zinksulfid.

Eine Einbettung in eine Kunststoffolie ist von Vorteil.

Besonders gut geeignet ist ein dehnbarer hybrider zweischichtiger lumineszierender Verbundstoff basierend auf der Kombination von dehnungsinduzierter und triboelektrisch induzierter Elektrolumineszenz.

Vorteilhaft ist eine Ausführungsform, wonach das Fehlerbekanntmachungselement ein Reflexionselement, insbesondere einen Spiegel, aufweist.

Das Reflexionselement ist vorteilhaft wenigstens im Wesentlichen im Bereich eines axialen Endes des Fehlerbekanntmachungselement angeordnet. Auch andere Anordnungen sind denkbar.

Vorteilhaft ist eine Ausführungsform, wonach die Vorrichtung ein Aussendungselement aufweist. Das Aussendungselement ist vorzugsweise als Leuchtdiode ausgebildet.

Eine Leuchtdiode ist von Vorteil, da sie günstig und robust ist.

Vorteilhaft ist eine Ausführungsform, wonach das Empfangselement als Fotodiode ausgebildet ist.

Eine Fotodiode ist von Vorteil, da sie günstig und robust ist.

Es ist jedoch auch möglich, dass das Empfangselement ein Photodetektor ist. Auch andere Formen sind möglich.

Vorteilhaft ist eine Ausführungsform, wonach das Empfangselement zum Empfang der emittierten Strahlung bzw. reflektierten Strahlung ausgebildet ist.

Vorteilhaft ist eine Ausführungsform, wonach das Empfangselement zur Detektion einer Änderung von Reflexionseigenschaften ausgebildet ist.

Reflexionseigenschaften betreffen vorteilhaft eine Lichtreflexion ambienten Lichts und/oder diffus reflektierten gerichteten Lichts und/oder spekular reflektierten gerichteten Lichts.

Die Lösung der oben gestellten Aufgabe gelingt ferner durch Anspruch 13, d. h. eine Wellenkupplung, aufweisend eine derartige Vorrichtung.

Die Lösung der oben gestellten Aufgabe gelingt ferner durch Anspruch 14, d. h. eine dynamoelektrische rotatorische Maschine, aufweisend: eine erste Welle; eine zweite Welle, wobei die erste Welle und die zweite Welle mittels einer Wellenkupplung gekuppelt sind; und eine derartige Vorrichtung.

Vorteilhaft ist eine Ausführungsform, wonach die erste Welle und/oder die zweite Welle als Hohlwelle ausgebildet ist.

Ein asynchroner Verlauf, insbesondere ein asynchroner Verlauf, der nicht nur kurz andauert, ist meist ein Hinweis auf einen Fehlerfall. Eine Schädigung der Wellenkupplung ist dadurch erkennbar.

Die Erfindung bietet den Vorteil, dass eine kostenintensive Überdimensionierung von insbesondere Geberkupplung, Geberwelle und Geberlager nicht länger nötig ist.

Durch die Erfindung ist es möglich, beispielsweise durch Überlast geschädigte oder zerstörte, Kupplungen zu erkennen.

Insbesondere für Servomotoren eignet sich die Erfindung gut. Servomotoren weisen oftmals eigengelagerte Geber auf. Hierbei ist die Geberwelle über eine Kupplung mit der Maschinenwelle verbunden. Bei einem Lagerschaden der Geberlager werden diese schwergängig und die Geberkupplung wird stärker belastet. Dies kann zur Zerstörung führen. Die Erfindung bietet jedoch den Vorteil, dass dies erkannt werden kann.

Im Folgenden wird die Erfindung anhand der in den Figuren dargestellten Ausführungsbeispiele näher beschrieben und erläutert. Es zeigen:
- FIG 1: eine Explosionsdarstellung eines beispielhaften Servomotors,
- FIG 2: eine mögliche Ausführung der Vorrichtung zur Überwachung einer eine erste Welle und eine zweite Welle kuppelnden Wellenkupplung,
- FIG 3: eine weitere mögliche Ausführung der Vorrichtung zur Überwachung einer eine erste Welle und eine zweite Welle kuppelnden Wellenkupplung,
- FIG 4: ein Verfahren.

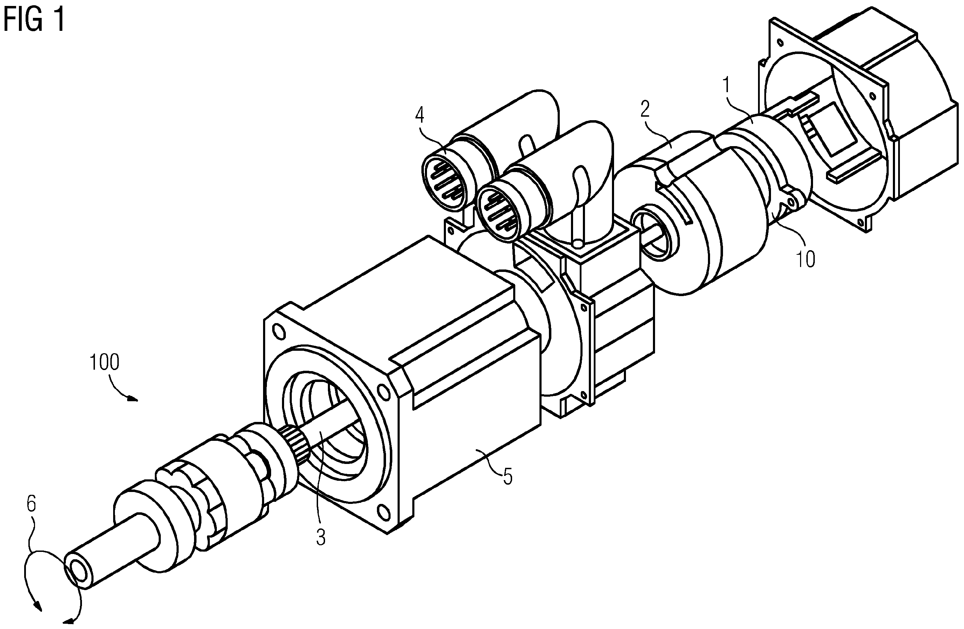

FIG 1 zeigt eine Explosionsdarstellung eines beispielhaften Servomotors 100. Der Servomotor weist einen Geber 1, eine Bremse 2, eine Welle 3, eine Anschlussvorrichtung 4 sowie ein Aktivteil 5 auf.

Die Figur zeigt ferner eine Rotationsrichtung 6.

Die Figur zeigt zudem eine Vorrichtung 10 zur Überwachung einer eine erste Welle und eine zweite Welle kuppelnden Wellenkupplung. Die Vorrichtung 10 wird in den folgenden Figuren näher beschrieben. Die Vorrichtung 10 kann zur Überwachung einer Wellenkupplung dienen, die eine Geberwelle mit einer Maschinenwelle kuppelt (wie in der Figur dargestellt). Ferner ist es denkbar, dass die Vorrichtung 10 zur Überwachung einer Kupplung der Maschinenwelle mit einer Last angeordnet ist. Die Vorrichtung 10 eignet sich auch für andere Wellenkupplungen.

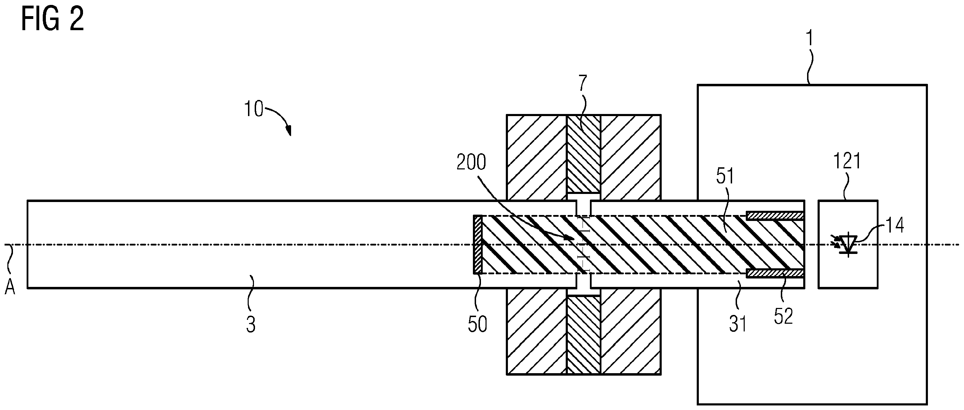

FIG 2 zeigt eine mögliche Ausführung der Vorrichtung 10 zur Überwachung einer eine erste Welle und eine zweite Welle kuppelnden Wellenkupplung.

Die erste Welle ist in der Figur eine Maschinenwelle 3. Die zweite Welle ist in der Figur eine Geberwelle 31. Die Figur zeigt zudem, dass die Maschinenwelle 3 und die Geberwelle 3 mittels einer Kupplung 7 (auch: Wellenkupplung) gekuppelt sind.

Die Figur zeigt zudem eine Rotationsachse A.

Die Vorrichtung 10 umfasst eine optische Einheit 121 mit einem Empfangselement, ausgebildet zum Empfang einer elektromagnetischen Strahlung, insbesondere Licht. Dies ist der Figur eine Fotodiode 14. Auch andere Empfangselemente sind denkbar.

Die optische Einheit 121 umfasst in der in der Figur gezeigten Ausführungsform kein Aussendungselement.

Die optische Einheit 121 ist in der Figur in oder am Geber 1 angeordnet.

Die Vorrichtung 10 umfasst einen Stab 51. Der Stab 50 ist mittels einer ersten Befestigung 50 in der Figur innerhalb der als Hohlwelle ausgebildeten Maschinenwelle 3 befestigt.

Der Stab 51 ist zudem mit einer zweiten Befestigung 52 innerhalb der als Hohlwelle ausgebildeten Geberwelle 31 befestigt.

Es ist auch möglich, den Stab 51 an einer anderen Stelle zu befestigen, z. B. an einem Außenumfang der Welle 3 bzw. 31.

Die Figur zeigt ein vorderes axiales Ende 511 und ein hinteres axiales Ende 512 des Stabs 51.

Der Stab ist vorteilhaft derart ausgebildet, dass er bei einem asynchronen Verlauf der Maschinenwelle 3 zur Geberwelle 31 abscherbar bzw. abbrechbar ist.

Eine erste Bruchfläche, insbesondere eine maschinenwellenseitige Bruchfläche, eines durch Abscherung und/oder Abbrechen hervorgegangenen ersten Teils des Stabs und eine zweite Bruchfläche, insbesondere eines geberwellenseitige Bruchfläche, eines durch Abscherung und/oder Abbrechen hervorgegangenen zweiten Teils des Stabs im Betrieb der Maschinenwelle 3 und Geberwelle 31 reiben vorteilhaft derart aneinander, dass Strahlung, vorzugsweise Licht, insbesondere durch Tribolumineszenz, emittierbar ist.

Die Fotodiode 14 detektiert dies und kann diese Information z. B. an eine Steuereinheit des Servomotors (nicht dargestellt) übermitteln.

Der Stab 51 weist vorteilhaft Kunststoff auf, z. B. PTFE.

Der Stab 51 kann z. B. in die als Hohlwelle ausgeführte Welle 3 bzw. 31 eingeklebt werden oder auf den Außenumfang der Welle 3 bzw. 31 aufgeklebt werden.

Auch ein Einspritzen ist denkbar.

Vorteilhaft ist das Material des Stabs 51 transparent, insbesondere transparenter Kunststoff.

Ein transparentes Material ist wegen des optischen Wirkprinzips von Vorteil, damit ein optisches Signal optimal durch den Stab übertragen werden kann.

Löst sich die mittels der Kupplung 7 hergestellte Verbindung zwischen Geberwelle 31 und Maschinenwelle 3, wird der Stab 51 abgeschert bzw. abgebrochen.

Der Stab 51 kann hierzu eine Sollbruchstelle 200 aufweisen.

Das Brechen des Stabs 51 bzw. das Reiben der Bruchflächen kann mittels der Fotodiode 14 durch Messen tribolumineszenter Effekte ausgewertet werden.

Zwischen der optischen Einheit 121, welche vorteilhaft geberseitig angeordnet ist, und der Befestigung 50 ist eine Distanz von einigen Zentimetern vorteilhaft, z. B. 1 cm bis 50 cm.

Möglich ist jedoch auch, dass sich eine Distanz - bei sehr großen Maschinen - über mehrere Meter erstreckt, z, B. 1 bis 10 m.

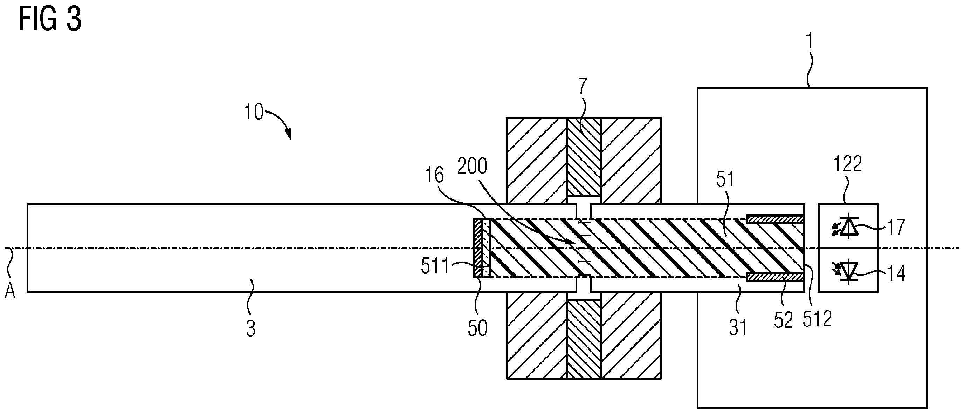

FIG 3 zeigt eine weitere mögliche Ausführung der Vorrichtung 10 zur Überwachung einer eine erste Welle und eine zweite Welle kuppelnden Wellenkupplung.

Anstatt der in FIG 2 beschriebenen Tribolumineszenz sind auch veränderte Reflexionseigenschaften des gebrochenen Stabs 51 auswertbar.

Dabei ist eine zusätzliche Beleuchtung hilfreich.

Dies gelingt durch eine optische Einheit 122, die ein Aussendungselement in Form einer Leuchtdiode 17 aufweist. Auch andere Aussendungselemente sind denkbar. Es ist zudem auch denkbar, dass am Aufstellungsort der Vorrichtung 10 vorherrschende Lichtverhältnisse als Beleuchtung ausreichend sind.

Die Figur zeigt die mit der Maschinenwelle 3 gekuppelte geberwelle 31. Die Wellen 3 und 31 sind in der Figur als Hohlwelle ausgebildet. Darin befindet sich der Stab 51.

Es erfolgt eine geberseitige Beleuchtung und vorteilhaft eine Reflektion an einem Spiegel 16, welcher maschinenwellenseitig angeordnet ist. Es erfolgt eine Detektion der Helligkeit mit der Fotodiode 14, welche auf der Geberseite angeordnet ist.

Die beschriebene Anordnung der Komponenten ist zu bevorzugen. Jedoch ist es auch möglich, die optische Einheit 121 bzw. 122 am axialen Ende der Maschinenwelle 3 anzuordnen und analog die anderen Komponenten zu tauschen.

Zwischen der optischen Einheit 122, welche vorteilhaft geberseitig angeordnet ist, und dem Spiegel 16 ist eine Distanz von einigen Zentimetern vorteilhaft, z. B. 1 cm bis 50 cm.

Möglich ist jedoch auch, dass sich eine Distanz - bei sehr großen Maschinen - über mehrere Meter erstreckt, z, B. 1 bis 10 m.

Die Erfindung bietet den Vorteil, dass eine beschädigte Kupplung zuverlässig und auf kostengünstige Weise erkannt werden kann.

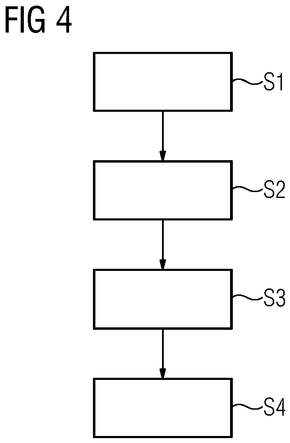

FIG 4 zeigt ein Verfahren.

In einem optionalen Verfahrensschritt S1 sendet das Aussendungselement elektromagnetische Strahlung, insbesondere Licht, aus.

In einem Verfahrensschritt S2 tritt ein asynchroner Verlauf der Maschinenwelle zur Geberwelle auf, woraufhin der Stab bricht bzw. abschert.

In einem Verfahrensschritt S3 erfolgt für die in FIG 2 beschriebene Ausführungsform der Vorrichtung: Die Bruchflächen reiben derart aneinander, dass Strahlung, vorzugsweise Licht, insbesondere durch Tribolumineszenz, emittiert wird.

In dem Verfahrensschritt S3 erfolgt für die in FIG 3 beschriebene Ausführungsform der Vorrichtung: Durch den Bruch bzw. die Abscherung des Stabs und/oder durch das Aneinanderreiben der Bruchflächen ändern sich die Reflexionseigenschaften. Denn die ausgesendete Strahlung (s. S1) wird in dieser Ausführungsform vorteilhaft durch den Spiegel reflektiert.

In einem verfahrensschritt S4 wird die emittierte Strahlung bzw. die geänderte Reflexionseigenschaft von der Fotodiode erkannt.

## Patentansprüche

1. Vorrichtung (10) zur Überwachung einer eine erste Welle (3) und eine zweite Welle (31) kuppelnden Wellenkupplung, aufweisend:
- eine optische Einheit (121) mit einem Empfangselement (14), ausgebildet zum Empfang einer elektromagnetischen Strahlung in Form von Licht,
- ein Fehlerbekanntmachungselement (51), wobei das Fehlerbekanntmachungselement (51) an und/oder innerhalb der ersten Welle (3) und an und/oder innerhalb der zweiten Welle (31) anordenbar ist,
- wobei das Fehlerbekanntmachungselement (51) zur Bekanntmachung eines asynchronen Verlaufs der ersten Welle (3) zur zweiten Welle (31) ausgebildet ist.

2. Vorrichtung (10) nach Anspruch 1, wobei ein vorderes axiales Ende (511) des Fehlerbekanntmachungselement (51) an der ersten Welle (3) befestigbar ist, wobei ein hinteres axiales Ende (512) an der zweiten Welle (31) befestigbar ist.

3. Vorrichtung (10) nach einem der vorhergehenden Ansprüche, wobei das Fehlerbekanntmachungselement (51) derart ausgebildet ist, dass es bei einem asynchronen Verlauf der ersten Welle (3) zur zweiten Welle (31) abscherbar bzw. abbrechbar ist.

4. Vorrichtung (10) nach einem der vorhergehenden Ansprüche, wobei das Fehlerbekanntmachungselement (51) derart ausgebildet ist, dass eine erste Bruchfläche eines durch Abscherung und/oder Abbrechen hervorgegangenen ersten Teils des Fehlerbekanntmachungselements (51) und eine zweite Bruchfläche eines durch Abscherung und/oder Abbrechen hervorgegangenen zweiten Teils des Fehlerbekanntmachungselements (51) im Betrieb der ersten Welle (3) und zweiten Welle (31), derart aneinander reiben, dass Strahlung, vorzugsweise Licht, insbesondere durch Tribolumineszenz, emittierbar ist.

5. Vorrichtung (10) nach einem der vorhergehenden Ansprüche, wobei das Fehlerbekanntmachungselement (51) Kunststoff aufweist.

6. Vorrichtung (10) nach einem der vorhergehenden Ansprüche, wobei das Fehlerbekanntmachungselement (51) Polytetrafluorethylen und/oder Polydimethylsiloxan aufweist.

7. Vorrichtung (10) nach einem der vorhergehenden Ansprüche, wobei das Fehlerbekanntmachungselement (51) eine Sollbruchstelle (200) aufweist.

8. Vorrichtung (10) nach einem der vorhergehenden Ansprüche, wobei das Fehlerbekanntmachungselement (51) ein Reflexionselement, insbesondere einen Spiegel (16), aufweist.

9. Vorrichtung (10) nach einem der vorhergehenden Ansprüche, aufweisend ein Aussendungselement (17), vorzugsweise ausgebildet als Leuchtdiode.

10. Vorrichtung (10) nach einem der vorhergehenden Ansprüche, wobei das Empfangselement (14) als Fotodiode ausgebildet ist.

11. Vorrichtung (10) nach einem der vorhergehenden Ansprüche, wobei das Empfangselement (14) zum Empfang der emittierten Strahlung bzw. reflektierten Strahlung ausgebildet ist.

12. Vorrichtung (10) nach einem der vorhergehenden Ansprüche, wobei das Empfangselement (14) zur Detektion einer Änderung von Reflexionseigenschaften ausgebildet ist.

13. Wellenkupplung (7), aufweisend eine Vorrichtung (10) nach einem der Ansprüche 1 bis 12.

14. Dynamoelektrische rotatorische Maschine (100), aufweisend:
- eine erste Welle (3),
- eine zweite Welle (31), wobei die erste Welle (3) und die zweite Welle (31) mittels einer Wellenkupplung (7) gekuppelt sind,
- eine Vorrichtung (10) nach einem der Ansprüche 1 bis 12.

15. Dynamoelektrische rotatorische Maschine (100) nach Anspruch 14, wobei die erste Welle (3) und/oder die zweite Welle (31) als Hohlwelle ausgebildet ist.

## Claims

1. Device (10) for monitoring a shaft coupling coupling a first shaft (3) to a second shaft (31), having:
- an optical unit (121) with a receiving element (14), embodied to receive an electromagnetic radiation in the form of light,
- an error notification element (51), wherein the error notification element (51) can be arranged on and/or within the first shaft (3) and on and/or within the second shaft (31),
- wherein the error notification element (51) is embodied to notify an asynchronous running of the first shaft (3) with respect to the second shaft (31).

2. Device (10) according to claim 1, wherein a front axial end (511) of the error notification element (51) can be fastened to the first shaft (3), wherein a rear axial end (512) can be fastened to the second shaft (31).

3. Device (10) according to one of the preceding claims, wherein the error notification element (51) is embodied so that this can shear off or break off if the first shaft (3) runs asynchronously with respect to the second shaft (31).

4. Device (10) according to one of the preceding claims, wherein the error notification element (51) is embodied so that a first fracture surface of a first part of the error notification element (51) arising as a result of the shearing-off and/or breaking-off and a second fracture surface of a second part of the error notification element (51) arising as a result of the shearing-off and/or breaking-off rub against one another during operation of the first shaft (3) and second shaft (31) so that radiation, preferably light, can be emitted in particular by means of triboluminescence.

5. Device (10) according to one of the preceding claims, wherein the error notification element (51) has plastic.

6. Device (10) according to one of the preceding claims, wherein the error notification element (51) has polytetrafluorethylene and/or polydimethylsiloxane.

7. Device (10) according to one of the preceding claims, wherein the error notification element (51) has a predetermined breaking point (200).

8. Device (10) according to one of the preceding claims, wherein the error notification element (51) has a reflection element, in particular a mirror (16).

9. Device (10) according to one of the preceding claims, having an emission element (17), preferably embodied as a light-emitting diode.

10. Device (10) according to one of the preceding claims, wherein the receiving element (14) is embodied as a photodiode.

11. Device (10) according to one of the preceding claims, wherein the receiving element (14) is embodied to receive the emitted radiation or reflected radiation.

12. Device (10) according to one of the preceding claims, wherein the receiving element (14) is embodied to detect a change in reflection properties.

13. Shaft coupling (7), having a device (10) according to one of claims 1 to 12.

14. Dynamoelectric rotary machine (100) having:
- a first shaft (3),
- a second shaft (31), wherein the first shaft (3) and the second shaft (31) are coupled by means of a shaft coupling (7),
- a device (10) according to one of claims 1 to 12.

15. Dynamo-electric rotary machine (100) according to claim 14, wherein the first shaft (3) and/or the second shaft (31) is embodied as a hollow shaft.

## Revendications

1. Dispositif (10) de contrôle d'un accouplement d'arbres accouplant un premier arbre (3) et un deuxième arbre (31), comportant :
- une unité (121) optique ayant un élément (14) de réception, constituée pour la réception d'un rayonnement électromagnétique sous forme de lumière,
- un élément (51) donnant connaissance d'un défaut, l'élément (51) donnant connaissance d'un défaut étant monté sur et/ou à l'intérieur du premier arbre (3) et sur et/ou à l'intérieur du deuxième arbre (31) ou pouvant l'être,
- dans lequel l'élément (51) donnant connaissance d'un défaut est constitué pour donner connaissance d'un défaut d'une marche asynchrone du premier arbre (3) par rapport au deuxième arbre (31).

2. Dispositif (10) suivant la revendication 1, dans lequel une extrémité (511) antérieure axiale de l'élément (51) donnant connaissance d'un défaut peut être fixée au premier arbre (3), tandis qu'une extrémité (512) postérieure axiale peut être fixée au deuxième arbre (31).

3. Dispositif (10) suivant l'une des revendications précédentes, dans lequel l'élément (51) donnant connaissance d'un défaut est constitué de manière à pouvoir être cisaillé ou rompu par une marche asynchrone du premier arbre (3) par rapport au deuxième arbre (31).

4. Dispositif (10) suivant l'une des revendications précédentes, dans lequel l'élément (51) donnant connaissance d'un défaut est constitué de manière à ce qu'une première surface de rupture d'une première partie, provenant du cisaillement et/ou de la rupture, de l'élément (51) donnant connaissance d'un défaut et/ou une deuxième surface de rupture d'une deuxième partie, provoquée par un cisaillement et une rupture, de l'élément (51) donnant connaissance d'un défaut, se déchirent l'une par rapport à l'autre lors du fonctionnement du premier arbre (3) et du deuxième arbre (31), de manière à pouvoir émettre du rayonnement, de préférence de la lumière, en particulier par triboluminescence.

5. Dispositif (10) suivant l'une des revendications précédentes, dans lequel l'élément (51) donnant connaissance d'un défaut comporte de la matière plastique.

6. Dispositif (10) suivant l'une des revendications précédentes, dans lequel l'élément (51) donnant connaissance d'un défaut comporte du polytétrafluoroéthylène et/ou du polydiméthylsiloxane.

7. Dispositif (10) suivant l'une des revendications précédentes, dans lequel l'élément (51) donnant connaissance d'un défaut a un point (200) destiné à se rompre.

8. Dispositif (10) suivant l'une des revendications précédentes, dans lequel l'élément (51) donnant connaissance d'un défaut a un élément de réflexion, en particulier un miroir (16).

9. Dispositif (10) suivant l'une des revendications précédentes, comportant un élément (17) d'émission, constitué de préférence sous la forme d'une diode électroluminescente.

10. Dispositif (10) suivant l'une des revendications précédentes, dans lequel l'élément (14) de réception est constitué sous la forme d'une photodiode.

11. Dispositif (10) suivant l'une des revendications précédentes, dans lequel l'élément (14) de réception est constitué pour la réception du rayonnement émis ou du rayonnement réfléchi.

12. Dispositif (10) suivant l'une des revendications précédentes, dans lequel l'élément (14) de réception est constitué pour la détection d'une variation des propriétés de réflexion.

13. Accouplement (7) d'arbres, comportant un dispositif (10) suivant l'une des revendications 1 à 12.

14. Machine (100) dynamoélectrique tournante, comportant :
- un premier arbre (3),
- un deuxième arbre (31), le premier arbre (3) et le deuxième arbre (31) étant accouplés au moyen d'un accouplement (7) d'arbres,
- un dispositif (10) suivant l'une des revendications 1 à 12.

15. Machine (100) dynamoélectrique tournante suivant la revendication 14, dans laquelle le premier arbre (3) et/ou le deuxième arbre (31) est constitué sous la forme d'un arbre creux.
